# EUROPEAN PATENT APPLICATION

(11) **EP 4 776 377 A1**
(43) Date of publication of application: **15.07.2026**
(21) Application number: 24939064.2
(22) Date of filing: 24.12.2024
(51) Int. Cl.: H01M 10/42

(54) **BATTERY MANAGEMENT ASSEMBLY AND APPARATUS**

(30) Priority: 05.11.2024 CN 202411565757; 05.11.2024 CN 202422695210 U
(71) Applicant: Shanghai Baicheng Electric Equipment Manufacture Co. Ltd., Shanghai 201806 (CN)
(72) Inventor: KUANG, Guofang, Shanghai 201806 (CN); YIN, Wei, Shanghai 201806 (CN)
(74) Representative: Ricker, Mathias
(86) International application number: PCT/CN2024/141719
(87) International publication number: WO 2026/097669

(57) **Abstract**

Provided are a battery management assembly and apparatus. The battery management assembly includes a PCB; and a BMS control board, a positive connection assembly, a negative connection assembly, a sampling circuit, a current control circuit, and a current limiting circuit that are spaced apart and disposed on one surface of the PCB. One end of the negative connection assembly is connected to the negative electrode of a battery. Another end of the negative connection assembly is connected to one end of the sampling circuit. Another end of the sampling circuit is connected to one end of the current control circuit. Another end of the current control circuit is connected to a first end of the BMS control board. One end of the positive connection assembly is connected to the positive electrode of the battery. Another end of the positive connection assembly is connected to one end of the current limiting circuit. Another end of the current limiting circuit is connected to a second end of the BMS control board.

## Description

This application claims priority to Chinese Patent Application No. 202411565757.5 filed with the China National Intellectual Property Administration (CNIPA) on Nov. 5, 2024 and Chinese Patent Application No. 202422695210.9 filed with the CNIPA on Nov. 5, 2024, the disclosures of which are incorporated herein by reference in its entireties.

### TECHNICAL FIELD

The present application relates to the field of battery management technology, for example, a battery management assembly and apparatus.

### BACKGROUND

With the continuous development of battery technology, the discharge current of a battery cell has been increasing, and the internal resistance of the battery cell has been decreasing. As a result, the discharge current requirements of the battery management system (BMS) have also become higher, leading to more severe heating of other electrical components connected to the BMS. It is necessary to provide an additional heat dissipation structure for the BMS and to consider avoidance of high-temperature areas in the circuit design. As a result, the circuit design and the manufacturing process are complex. Moreover, multiple types of components are concentrated together, causing mutual heat dissipation interference and an unsatisfactory heat dissipation performance.

### SUMMARY

The present application provides a battery management assembly and apparatus to improve the heat dissipation performance of a BMS control board and simplify a circuit design.

Embodiments of the present application provide a battery management assembly. The battery management assembly includes a PCB, and a BMS control board. The BMS control board, a positive connection assembly, a negative connection assembly, a sampling circuit, a current control circuit, and a current limiting circuit are spaced apart and disposed on one surface of the PCB.

One end of the negative connection assembly is connected to the negative electrode of a battery. Another end of the negative connection assembly is connected to one end of the sampling circuit by the PCB. Another end of the sampling circuit is connected to one end of the current control circuit by the PCB. Another end of the current control circuit is connected to a first end of the BMS control board by the PCB.

One end of the positive connection assembly is connected to the positive electrode of the battery. Another end of the positive connection assembly is connected to one end of the current limiting circuit by the PCB. Another end of the current limiting circuit is connected to a second end of the BMS control board.

In an embodiment, the battery management assembly also includes at least one heat dissipation assembly. For each of the at least one heat dissipation assembly, one end of the heat dissipation assembly is connected to the battery, and another end of the heat dissipation assembly is connected to a third end of the BMS control board by the PCB. The third end of the BMS control board is configured to collect battery information of the battery.

In an embodiment, the positive connection assembly includes a positive connection patch. The top surface of the positive connection patch is connected to the positive electrode of the battery. The bottom surface of the positive connection patch is connected to the PCB.

The negative connection assembly includes a negative connection patch. The top surface of the negative connection patch is connected to the negative electrode of the battery. The bottom surface of the negative connection patch is connected to the PCB.

Each of the at least one heat dissipation assembly includes a heat dissipation connection patch. The top surface of the heat dissipation connection patch is connected to the positive/negative electrode of the battery. The bottom surface of the heat dissipation connection patch is connected to the PCB.

In an embodiment, the BMS control board includes a first connection portion, a second connection portion, and at least one third connection portion. The first connection portion, the second connection portion, and the at least one third connection portion each include multiple connection grooves. The multiple connection grooves are disposed at the edge of the BMS control board.

The first end of the BMS control board is connected to the current control circuit by the multiple connection grooves of the first connection portion. The second end of the BMS control board is connected to the current limiting circuit by the multiple connection grooves of the second connection portion. The third end of the BMS control board is connected to the heat dissipation assembly by the multiple connection grooves of each of the at least one third connection portion.

In an embodiment, at least one connection groove on the BMS control board is configured to connect the BMS control board to the PCB.

In an embodiment, the sampling circuit includes a sampling resistor, the current control circuit includes a metal-oxide-semiconductor field-effect transistor (MOS), and the current limiting circuit includes a fuse.

In an embodiment, the PCB includes an aluminum substrate that includes a circuit layer; an insulating layer disposed on the side of the circuit layer facing away from the BMS control board; and a metal layer disposed on the side of the insulating layer facing away from the BMS control board.

Optionally, the positive connection patch, the negative connection patch, and the heat dissipation patch each include copper.

Embodiments of the present application provide a battery management apparatus. The battery management apparatus includes the battery management assembly of the first aspect.

In an embodiment, the battery management apparatus also includes a battery holder. Multiple battery cells are disposed in the battery holder. Positive electrodes of the multiple battery cells are connected to the positive connection patch by the battery holder. Negative electrodes of the multiple battery cells are connected to the negative connection patch by the battery holder.

### BRIEF DESCRIPTION OF DRAWINGS

FIG. 1 is a diagram illustrating the structure of a battery management assembly according to embodiments of the present application.
FIG. 2 is a diagram illustrating the structure of a battery management assembly according to embodiments of the present application.
FIG. 3 is a diagram illustrating the structure of a battery management assembly according to embodiments of the present application.
FIG. 4 is a diagram illustrating the structure of a PCB of a battery management assembly according to embodiments of the present application.
FIG. 5 is a diagram illustrating the structure of a battery management apparatus according to embodiments of the present application.

### DETAILED DESCRIPTION

Technical solutions in embodiments of the present application will be described in conjunction with drawings in embodiments of the present application. Apparently, the embodiments described herein are part, not all, of embodiments of the present application. Based on embodiments of the present application, all other embodiments obtained by those of ordinary skill in the art on the premise that no creative work is done are within the scope of the present application.

It is to be noted that terms such as "first" and "second" in the description, claims, and drawings of the present application are used to distinguish between similar objects and are not necessarily used to describe a particular order or sequence. It is to be understood that data used in this manner are interchangeable where appropriate so that the embodiments of the present application described herein can be implemented in an order not illustrated or described herein. In addition, terms "include", "have", and any variations thereof are intended to encompass a nonexclusive inclusion. For example, a process, method, system, product, or device that includes a series of steps or units not only includes the expressly listed steps or units but may also include other steps or units that are not expressly listed or are inherent to such process, method, product, or device.

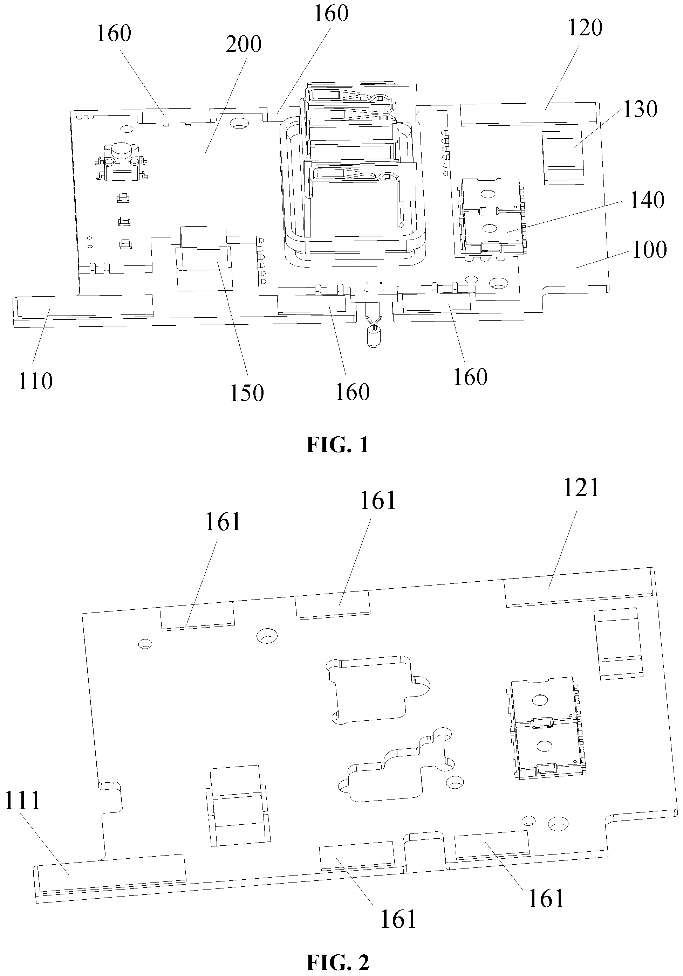

FIG. 1 is a diagram illustrating the structure of a battery management assembly according to embodiments of the present application. As shown in FIG. 1, the battery management assembly includes a PCB 100, and a BMS control board 200. The BMS control board 200, a positive connection assembly 110, a negative connection assembly 120, a sampling circuit 130, a current control circuit 140, and a current limiting circuit 150 are spaced apart and disposed on one surface of the PCB 100. One end of the negative connection assembly 120 is connected to the negative electrode of a battery. Another end of the negative connection assembly 120 is connected to one end of the sampling circuit 130 by the PCB 100. Another end of the sampling circuit 130 is connected to one end of the current control circuit 140 by the PCB 100. Another end of the current control circuit 140 is connected to a first end of the BMS control board 200 by the PCB 100. One end of the positive connection assembly 110 is connected to the positive electrode of the battery. Another end of the positive connection assembly 110 is connected to one end of the current limiting circuit 150 by the PCB 100. Another end of the current limiting circuit 150 is connected to a second end of the BMS control board 200.

Wires are disposed on one surface of the PCB to enable electrical connection between the BMS control board and the positive connection assembly 110, the negative connection assembly 120, the sampling circuit 130, the current control circuit 140, and the current limiting circuit 150. The BMS control board 200 is the core part of the battery management assembly. The BMS control board 200 can monitor information such as a voltage, a current, and a temperature of the battery by using components such as the sampling circuit 130, the current control circuit 140, and the current limiting circuit 150 that are connected to the BMS control board 200. The current flowing through the sampling circuit 130, the current control circuit 140, and the current limiting circuit 150 that are directly connected to the positive electrode or the negative electrode of the battery is relatively large, leading to relatively high temperature and heat. The current flowing through the body of the BMS control board 200 is relatively small, leading to relatively low temperature and heat. The BMS control board 200 is separated from components with high heat generation, thereby reducing the temperature rise performance of the PCB 100 and improving the overall heat dissipation performance of the battery management assembly. The positive connection assembly 110, the negative connection assembly 120, the sampling circuit 130, the current control circuit 140, and the current limiting circuit 150 may be spaced apart and disposed in different areas of the PCB 100, thereby ensuring that heat dissipation performances of the multiple modules do not affect each other and further improving the heat dissipation performance.

It is to be noted that positions of the positive connection assembly 110, the negative connection assembly 120, the sampling circuit 130, the current control circuit 140, and the current limiting circuit 150 on the PCB 100 are not limited in this embodiment. By way of example, as shown in FIG. 1, the BMS control board 200 may be disposed in the central part of the PCB board 100, leaving space for other components to surround the BMS control board 200. The positive connection assembly 110 is disposed at a corner of the PCB 100 to shorten the connection path between the positive electrode and the positive connection assembly 110. The negative connection assembly 120 is disposed at a corner of the PCB 100 to shorten the connection path between the negative electrode and the negative connection assembly 120. One end of the sampling circuit 130 is connected to the negative connection assembly 120 by a wire on the PCB board 100. Another end of the sampling circuit 130 is connected to one end of the current control circuit 140 by a wire. Another end of the current control circuit 140 is connected to the first end of the BMS control board 200. The sampling circuit 130 may be a sampling resistor. The BMS control board 200 may acquire battery information according to a current or a voltage flowing through the sampling resistor. The current control circuit 140 may be a discharge metal-oxide-semiconductor field-effect (MOS) transistor. The current control circuit 140 may perform a switching operation through the control signal of the BMS control board 200 to adjust the discharge state of the battery and prevent the battery from over-discharging. The sampling circuit 130 may be disposed on the edge portion of the PCB 100 adjacent to the negative connection assembly 120, and the current control circuit 140 may be disposed on a position of the PCB 100 adjacent to the BMS control board 200, thereby leaving a certain distance between the sampling circuit 130 and the current control circuit 140 on the PCB 100 and reducing the influence between the heat dissipation of the sampling circuit 130 and the heat dissipation of the current control circuit 140. One end of the current limiting circuit 150 is connected to the positive connection assembly 110 by a wire on the PCB board 100. Another end of the current limiting circuit 150 is connected to the second end of the BMS control board 200 by a wire. The current limiting circuit 150 may be a fuse. When the current in the battery abnormally rises to a certain level and generates a certain degree of heat, the current limiting circuit 150 can cut off the current to protect the components on the PCB 100 from being burned. The current limiting circuit 150 may be disposed on a part of the PCB 100 adjacent to the BMS control board 200 to reduce the heat dissipation impact between the positive connection assembly 110 and the current limiting circuit 150.

In the battery management assembly of this embodiment of the present application, the BMS control board with a relatively small heat generation is separated from the sampling circuit, the current control circuit, and the current limiting circuit with a relatively large heat generation on the PCB, and the sampling circuit, the current control circuit, and the current limiting circuit are spaced apart on the PCB, thereby reducing the heat dissipation impact between the multiple modules, improving the overall heat dissipation performance, eliminating the need to additionally provide a separate heat dissipation structure for the BMS control board, reducing the overall circuit design difficulty, and simplifying the processing process.

Optionally, reference is made to FIG. 1 based on the previous embodiments. The battery management assembly also includes at least one heat dissipation assembly 160. For each heat dissipation assembly 160, one end of the heat dissipation assembly 160 is connected to the battery, and another end of the heat dissipation assembly 160 is connected to the third end of the BMS control board 200 by the PCB 100. The third end of the BMS control board 200 is configured to collect battery information of the battery.

Multiple battery cells may be disposed in the battery. Each battery cell is connected to the third end of the BMS control board 200 by the heat dissipation assembly 160 and a wire on the PCB 100 so that the BMS control board 200 can monitor battery information of each battery cell in the battery. The position and number of heat dissipation assemblies 160 on the PCB 100 are not limited in this embodiment. By way of example, as shown in FIG. 1, four heat dissipation assemblies 160 are disposed on the PCB 100 and are each connected to a battery cell. The heat dissipation assembly 160 may be disposed at an edge portion of the PCB 100 to shorten the connection path between the cell and the BMS control board 200 and further improve the heat dissipation performance of the PCB 100.

Optionally, FIG. 2 is a diagram illustrating the structure of a battery management assembly according to embodiments of the present application. Reference is made to FIG. 2 based on the previous embodiments. The positive connection assembly 110 includes a positive connection patch 111. The top surface of the positive connection patch 111 is connected to the positive electrode of the battery. The bottom surface of the positive connection patch 111 is connected to the PCB 100. The negative connection assembly 120 includes a negative connection patch 121. The top surface of the negative connection patch 121 is connected to the negative electrode of the battery. The bottom surface of the negative connection patch 121 is connected to the PCB 100. The heat dissipation assembly 160 includes a heat dissipation connection patch 161. The top surface of the heat dissipation connection patch 161 is connected to the positive/negative electrode of the battery. The bottom surface of the heat dissipation connection patch 161 is connected to the PCB 100.

The positive connection patch 111, the negative connection patch 121, and the heat dissipation connection patch 161 may be a metal foil in a specific shape. The metal foil can increase the contact area at the connection between the PCB 100 and the positive/negative electrode of the battery, thereby ensuring the stability of the circuit connection. The metal foil can dissipate the heat on the connection path between the PCB 100 and the positive/negative electrode of the battery, thereby improving the heat dissipation performance. The bottom surface of the positive connection patch 111, the bottom surface of the negative connection patch 121, and the bottom surface of the heat dissipation connection patch 161 may be welded to the PCB 100. The shape and material of the metal foil are not limited in this embodiment. By way of example, as shown in FIG. 2, the positive connection patch 111, the negative connection patch 121, and the heat dissipation connection patch 161 may be configured as rectangular copper foils.

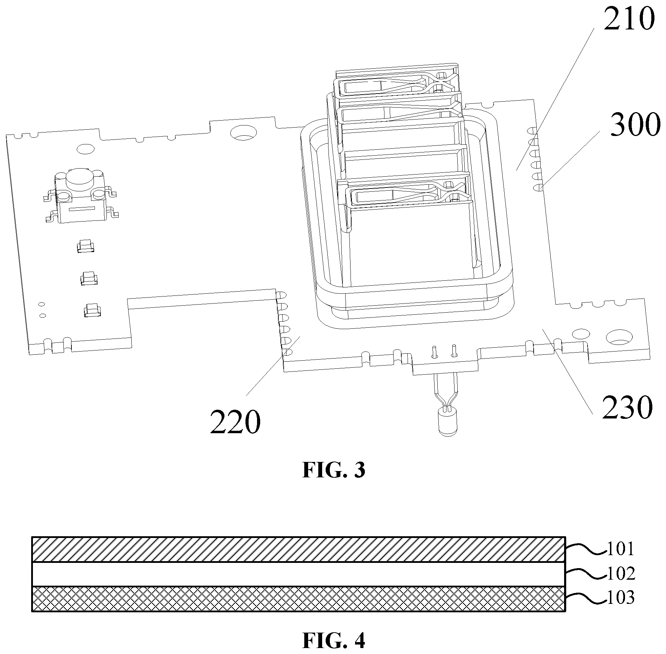

Optionally, FIG. 3 is a diagram illustrating the structure of a battery management assembly according to embodiments of the present application. Reference is made to FIG. 1 and FIG. 3 based on the previous embodiments. The BMS control board 200 includes a first connection portion 210, a second connection portion 220, and at least one third connection portion 230. The first connection portion 210, the second connection portion 220, and the at least one third connection portion 230 each include multiple connection grooves 300. The connection grooves 300 are disposed at the edge of the BMS control board 200. A first end of the BMS control board 200 is connected to the current control circuit 140 by the connection grooves 300 of the first connection portion 210. A second end of the BMS control board 200 is connected to the current limiting circuit 150 by the connection grooves 300 of the second connection portion 220. A third end of the BMS control board 200 is connected to the heat dissipation assembly 160 by the connection grooves 300 of the third connection portion 230.

The first connection portion 210, the second connection portion 220, and the third connection portion 230 may be disposed on different end faces of the BMS control board 200, thereby reducing the heat dissipation impact between different connections. The BMS control board 200 has a certain thickness. In the thickness direction, edge portions of different end faces of the BMS control board 200 are provided with different numbers of connection grooves 300. The BMS control board 200 may be connected to the current control circuit 140, the current limiting circuit 150, and the heat dissipation assembly 160 by the connection grooves 300 on the first connection portion 210, the connection grooves 300 on the second connection portion 220, and the connection grooves 300 on the third connection portion 230 respectively. The connection grooves 300 can increase the connection areas between the BMS control board 200 and the current control circuit 140, the current limiting circuit 150, and the heat dissipation assembly 160, thereby further improving the heat dissipation performance. The shapes, sizes, and number of the connection grooves 300 on different connection parts are not limited in this embodiment. By way of example, as shown in FIG. 3, the first connection portion 210 and the second connection portion 220 may each be provided with six arc-shaped connection grooves 300, and the third connection portion 230 may be provided with two arc-shaped connection grooves 300.

Optionally, reference is made to FIG. 1 and FIG. 3 based on the previous embodiments. The connection grooves 300 are also configured to connect the BMS control board 200 to the PCB board 100.

A metal flexible wire may be disposed in the connection groove 300. On the basis that the BMS control board 200 is electrically connected to the current control circuit 140, the current limiting circuit 150, and the heat dissipation assembly 160, the BMS control board 200 is fixedly connected to the PCB 100 by the metal flexible wire. Alternatively, solder paste may be applied to an area of the PCB 100 where the connection groove 300 is connected to the BMS control board 200, and electrical connection and fixation between the BMS control board 200 and the PCB 100 can be achieved through a soldering process. In this embodiment, the manner of connection between the BMS control board 200 and the PCB 100 by the connection groove 300 is not limited.

Optionally, FIG. 4 is a diagram illustrating the structure of a PCB of a battery management assembly according to embodiments of the present application. Reference is made to FIG. 4 based on the previous embodiments. The PCB 100 includes an aluminum substrate, and the aluminum substrate includes: a circuit layer 101, an insulating layer 102 disposed on the side of the circuit layer 101 facing away from the BMS control board 200, and a metal layer 103 disposed on the side of the insulating layer 102 facing away from the BMS control board 200.

The circuit layer 101 may be provided with connection wires. The connection wires may be obtained by copper foil etching. The BMS control board 200, the positive connection assembly 110, the negative connection assembly 120, the sampling circuit 130, the current control circuit 140, and the current limiting circuit 150 are disposed on the surface of the circuit layer 101 and are electrically connected by connection wires on the circuit layer 101. The insulating layer 102 can bond the circuit layer 101 to the metal layer 103 together and provide insulation and heat conduction. Heat generated when components on the surface of the circuit layer 101 are operating is quickly transferred to the metal layer 103 through the insulating layer 102, and the heat is emitted through the metal layer 103, thereby achieving heat dissipation from components on the surface of the circuit layer 101. The metal layer 103 may be an aluminum plate, providing support for the PCB 100 and improving the heat dissipation performance of the PCB 100.

Embodiments of the present application also provide a battery management apparatus. The battery management apparatus of this embodiment of the present application includes the battery management assembly of any previous embodiment and has the beneficial effects of the battery management assembly of any previous embodiment.

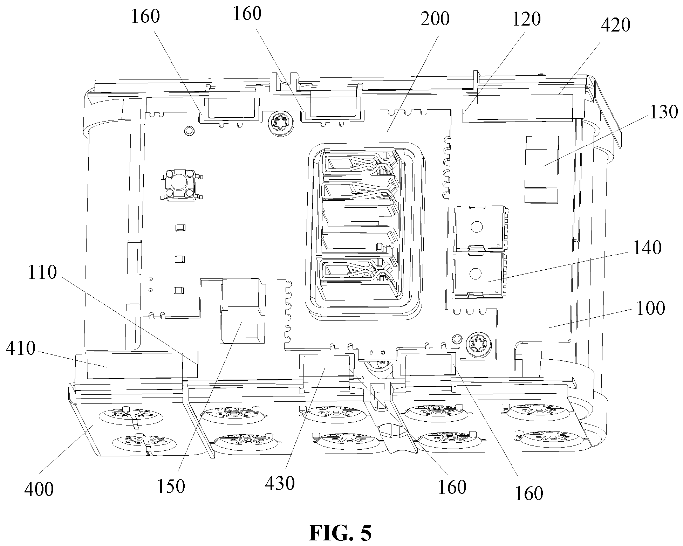

Optionally, FIG. 5 is a diagram illustrating the structure of a battery management apparatus according to embodiments of the present application. Reference is made to FIG. 2 and FIG. 5 based on the previous embodiments. The battery management apparatus also includes a battery holder 400. Multiple battery cells are disposed in the battery holder 400. The positive electrodes of the multiple battery cells are connected to the positive connection patch 111 by the battery holder 400. The negative electrodes of the multiple battery cells are connected to the negative connection patch 121 by the battery holder.

The battery holder 400 may fixedly connect the battery cells to form a battery pack. The PCB 100 may be disposed on one surface of the battery pack. The positive electrodes of the multiple battery cells are connected together as the positive electrode of the battery pack and are connected to the positive connecting piece 410 of the battery holder 400. The negative electrodes of the multiple battery cells are connected together as the negative electrode of the battery pack and are connected to the negative connecting piece 420 of the battery holder 400. The positive connecting piece 410 is connected to the positive connection patch 111, and the negative connecting piece 420 is connected to the negative connection patch 121, so that the battery information of the battery pack is transmitted to the BMS control board 200 through the PCB 100. The battery holder 400 is also provided with a battery cell connecting piece 430. The positive electrode or the negative electrode of a battery cell may be connected to the heat dissipation connection patch 161 by the battery cell connecting piece 430 so that the information of the battery cell is transmitted to the BMS control board 200 through the PCB 100.

It is to be understood that various forms of the preceding flows may be used with steps reordered, added, or removed. For example, the steps described in the present application may be executed in parallel, in sequence, or in a different order as long as the desired results of the technical solutions in the present application are achieved. The execution sequence of these steps is not limited herein.

## Claims

1. A battery management assembly, comprising:
a printed circuit board, PCB; and
a battery management system, BMS, control board, a positive connection assembly, a negative connection assembly, a sampling circuit, a current control circuit, and a current limiting circuit;
wherein the BMS control board, the positive connection assembly, the negative connection assembly, the sampling circuit, the current control circuit, and the current limiting circuit are spaced apart and disposed on one surface of the PCB;
wherein one end of the negative connection assembly is connected to a negative electrode of a battery, another end of the negative connection assembly is connected to one end of the sampling circuit by the PCB, another end of the sampling circuit is connected to one end of the current control circuit by the PCB, and another end of the current control circuit is connected to a first end of the BMS control board by the PCB; and
one end of the positive connection assembly is connected to a positive electrode of the battery, another end of the positive connection assembly is connected to one end of the current limiting circuit by the PCB, and another end of the current limiting circuit is connected to a second end of the BMS control board.

2. The battery management assembly of claim 1, further comprising at least one heat dissipation assembly, wherein for each of the at least one heat dissipation assembly, one end of the heat dissipation assembly is connected to the battery, and another end of the heat dissipation assembly is connected to a third end of the BMS control board by the PCB, and the third end of the BMS control board is configured to collect battery information of the battery.

3. The battery management assembly of claim 2, wherein
the positive connection assembly comprises a positive connection patch, a top surface of the positive connection patch is connected to the positive electrode of the battery, and a bottom surface of the positive connection patch is connected to the PCB;
the negative connection assembly comprises a negative connection patch, a top surface of the negative connection patch is connected to the negative electrode of the battery, and a bottom surface of the negative connection patch is connected to the PCB; and
each of the at least one heat dissipation assembly comprises a heat dissipation connection patch, a top surface of the heat dissipation connection patch is connected to the positive/negative electrode of the battery, and a bottom surface of the heat dissipation connection patch is connected to the PCB.

4. The battery management assembly of claim 2, wherein
the BMS control board comprises a first connection portion, a second connection portion, and at least one third connection portion;
each of the first connection portion, the second connection portion, and the at least one third connection portion comprises a plurality of connection grooves; and the plurality of connection grooves are disposed at an edge of the BMS control board; and
the first end of the BMS control board is connected to the current control circuit by the plurality of connection grooves of the first connection portion, the second end of the BMS control board is connected to the current limiting circuit by the plurality of connection grooves of the second connection portion, and the third end of the BMS control board is connected to the heat dissipation assembly by the plurality of connection grooves of each of the at least one third connection portion.

5. The battery management assembly of claim 4, wherein at least one connection groove on the BMS control board is configured to connect the BMS control board to the PCB.

6. The battery management assembly of claim 1, wherein the sampling circuit comprises a sampling resistor, the current control circuit comprises a metal-oxide-semiconductor field-effect transistor (MOS), and the current limiting circuit comprises a fuse.

7. The battery management assembly of claim 1, wherein the PCB comprises an aluminum substrate, wherein the aluminum substrate comprises:
a circuit layer;
an insulating layer disposed on a side of the circuit layer facing away from the BMS control board; and
a metal layer disposed on a side of the insulating layer facing away from the BMS control board.

8. The battery management assembly of claim 2, wherein each of the positive connection patch, the negative connection patch, and the heat dissipation patch comprises copper.

9. A battery management apparatus, comprising the battery management assembly of any one of claims 1 to 8.

10. The battery management apparatus of claim 9, further comprising a battery holder, wherein a plurality of battery cells are disposed in the battery holder, positive electrodes of the plurality of battery cells are connected to the positive connection patch by the battery holder, and negative electrodes of the plurality of battery cells are connected to the negative connection patch by the battery holder.
